# EUROPEAN PATENT APPLICATION

(11) **EP 3 933 286 A1**
(43) Date of publication of application: **05.01.2022**
(21) Application number: 20762496.6
(22) Date of filing: 07.02.2020
(51) Int. Cl.: F24F 11/30, F24F 11/58

(54) **AIR-CONDITIONING UNIT MANAGEMENT METHOD, MANAGEMENT DEVICE, AND MANAGEMENT SYSTEM**

(30) Priority: 27.02.2019 JP 2019034773
(71) Applicant: DAIKIN INDUSTRIES, LTD., Osaka-shi, Osaka 530-8323 (JP)
(72) Inventor: KOURA, Yuusaku, Osaka-shi, Osaka 530-8323 (JP)
(74) Representative: Global IP Europe Patentanwaltskanzlei
(86) International application number: PCT/JP2020/004952
(87) International publication number: WO 2020/175112

(57) **Abstract**

In a database (DB) of the prior art created on a management server for managing components of an air conditioning apparatus, it is not possible to change and register only a component among the components of the air conditioning apparatus. For such a database (DB), changes to the database (DB) need to be manually made. An air conditioning unit management method according to the present disclosure is a management method for managing an air conditioning unit (10) including a plurality of components (11). The air conditioning unit management method includes a first step (S14) and a second step (S24). The first step (S14) is a step of assigning a specific ID to at least a first component (11). The second step (S24) is a step of storing operation information of the first component (11) in association with the specific ID assigned to the first component (11).

## Description

### [Technical Field]

An air conditioning unit management method for managing an air conditioning unit including a plurality of components, a management apparatus for implementing an air conditioning unit management method, and a management system.

### [Background Art]

Recently, a retrofit has been performed as a maintenance service for significantly increasing the performance of an existing air conditioning apparatus by replacing a component of the air conditioning apparatus. PTL 1 (Japanese Unexamined Patent Application Publication No. 2010-048422) describes a retrofit for replacing a condenser is performed.

### [Summary of Invention]

### [Technical Problem]

In a database DB of the prior art created on a management server for managing components of an air conditioning apparatus, it is not possible to change and register only a component among the components of the air conditioning apparatus.

### [Solution to Problem]

An air conditioning unit management method according to a first aspect is a management method for managing an air conditioning unit including a plurality of components. The air conditioning unit management method includes a first step and a second step. The first step is a step of assigning a specific ID to at least a first component. The second step is a step of storing operation information of the first component in association with the specific ID assigned to the first component.

Accordingly, at least the first component is managed on a per component basis, and a database DB that is also appropriate to a case of replacing the first component can be created.

An air conditioning unit management method according to a second aspect is the air conditioning unit management method according to the first aspect and further includes a third step and a fourth step. In the air conditioning unit management method, specific IDs are assigned to the plurality of components respectively in the first step. The third step is a step of obtaining pieces of operation information of the plurality of components via a network. The fourth step is a step of storing, on the basis of the specific IDs, the pieces of operation information in association with pieces of component information of the components respectively.

Accordingly, the plurality of components are managed on a per component basis, and a database DB appropriate to a retrofit can be created.

An air conditioning unit management method according to a third aspect is the air conditioning unit management method according to the first or second aspect, is a method for managing a plurality of air conditioning units, and further includes a fifth step, a sixth step, and a seventh step. The fifth step is a step of selecting one air conditioning unit from among the plurality of air conditioning units. The sixth step is a step of obtaining, among a plurality of pieces of operation information, pieces of operation information of the plurality of components of the selected air conditioning unit. The seventh step is a step of generating information about the air conditioning unit from the obtained pieces of operation information.

A management apparatus according to a fourth aspect manages an air conditioning unit including a plurality of components. The management apparatus includes a storage unit and a determination unit. The storage unit has a plurality of tables TB for storing pieces of operation information of the respective components obtained from the air conditioning unit. The determination unit determines a table TB for storing a piece of operation information among the plurality of tables TB. A specific ID is assigned to at least a first component among the plurality of components. The determination unit determines the table TB on the basis of the specific ID. The storage unit stores the piece of operation information in the determined table TB.

A management apparatus according to a fifth aspect is the management apparatus according to the fourth aspect and further includes a communication unit that obtains the pieces of operation information from the air conditioning unit via a network.

A management apparatus according to a sixth aspect is the management apparatus according to a fourth or fifth aspect and further includes an extraction unit and a generation unit. The extraction unit extracts from among pieces of operation information stored in the storage unit, the pieces of operation information of the plurality of components included in the air conditioning unit that is selected. The generation unit generates information about the air conditioning unit from the pieces of operation information extracted by the extraction unit.

A management apparatus according to a seventh aspect is the management apparatus according to any of the fourth to sixth aspects, in which the tables TB are provided for respective types of the components.

A management apparatus according to an eighth aspect is the management apparatus according to any of the fourth to seventh aspects, in which in a case where a component is replaced by a new component and where an item of a piece of operation information of the new component is added, the item is also added to the tables TB.

A management apparatus according to a ninth aspect is the management apparatus according to any of the fourth to eighth aspects, in which initial registration of the tables TB of the plurality of components is performed on the basis of a model code of the air conditioning unit.

A management apparatus according to a tenth aspect is the management apparatus according to any of the fourth to ninth aspects, in which the tables TB are generated by an external system.

A management system according to an eleventh aspect includes an air conditioning unit, a management apparatus, and a monitoring terminal. The management apparatus is the management apparatus according to any of the fourth to tenth aspects. The monitoring terminal monitors the air conditioning unit. The management system presents the pieces of operation information of the components in response to a request from the monitoring terminal.

A management system according to a twelfth aspect is the management apparatus according to the eleventh aspect, in which the management apparatus provides information to the monitoring terminal in a case of detecting a malfunction in the air conditioning unit.

### [Brief Description of Drawings]

[Fig. 1] Fig. 1 is a schematic diagram illustrating a management system.
[Fig. 2] Fig. 2 is a schematic diagram of air conditioning apparatuses.
[Fig. 3] Fig. 3 is a schematic diagram of a management apparatus and a monitoring apparatus.
[Fig. 4] Fig. 4 is a flowchart of an initial registration process.
[Fig. 5] Fig. 5 is a flowchart of an operation information storing process.
[Fig. 6] Fig. 6 is a flowchart of a component registration process.
[Fig. 7] Fig. 7 is a flowchart of a performance information generation process.
[Fig. 8A] Fig. 8A illustrates an example of an input screen of the initial registration process.
[Fig. 8B] Fig. 8B illustrates an example of a completion screen of the initial registration process.
[Fig. 9] Fig. 9 illustrates an example of operation information.
[Fig. 10A] Fig. 10A is a diagram illustrating a replacement component.
[Fig. 10B] Fig. 10B illustrates an example of an input screen of the component registration process.
[Fig. 10C] Fig. 10C illustrates an example of a completion screen of the component registration process.
[Fig. 11] Fig. 11 illustrates an example of an input screen of the performance information generation process.

### [Description of Embodiments]

Hereinafter, a management system 100 according to an embodiment of the present disclosure is described. Note that the following embodiment is a specific example, is not intended to limit the technical scope, and can be changed as appropriate without departing from the spirit.

### (1) Overview

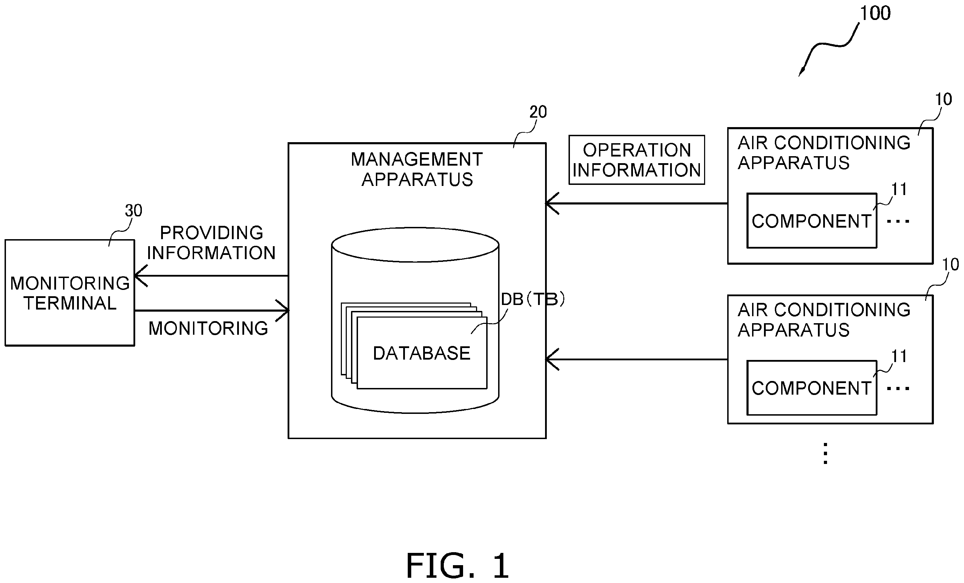

First, the overview of the management system 100 is described. Fig. 1 is a schematic diagram illustrating the management system 100 according to the embodiment of the present disclosure. The management system 100 includes a plurality of air conditioning apparatuses 10, a management apparatus 20, and a monitoring terminal 30.

After each air conditioning apparatus 10 is installed in, for example, a target facility, the administrator using the management system 100 registers information about the air conditioning apparatus 10 in a database DB created on the management apparatus 20. After the information about the air conditioning apparatus 10 is registered in the database DB, pieces of operation information are accumulated in tables TB in the database DB. The pieces of operation information are pieces of information based on the operation states of components 11, such as a compressor, a heat exchanger, and an expansion valve, included in the air conditioning apparatus 10. In a case where a malfunction occurs in the air conditioning apparatus 10, the monitoring terminal 30 connected to the management apparatus makes various requests to the management apparatus to correct the malfunction.

In a database DB of the prior art, pieces of operation information of the plurality of components 11 included in the air conditioning apparatus 10 are stored in the same table TB.

Recently, a retrofit has been recommended in which a component 11 among the plurality of components 11 included in the air conditioning apparatus 10 is replaced to increase the performance of the air conditioning apparatus 10. When a retrofit is performed while the database DB of the prior art is used, the air conditioning apparatus 10 subjected to the retrofit is registered in the database DB as a new air conditioning apparatus 10. Accordingly, in the database DB, a table TB for storing operation information before the retrofit and a table TB for storing operation information after the retrofit are created. Therefore, the administrator needs to perform an operation of, for example, integrating the plurality of tables TB into one table as necessary.

As the database DB in the management system 100 according to the embodiment of the present disclosure, a database DB is provided that is appropriate to a case of replacing only a component among the components 11 by managing information for each type of component 11.

Accordingly, it is possible to efficiently manage various types of information. Further, it becomes easy to provide various types of information in response to a request from the monitoring terminal 40 connected to the management apparatus 20.

### (2) Air Conditioning Apparatus 10

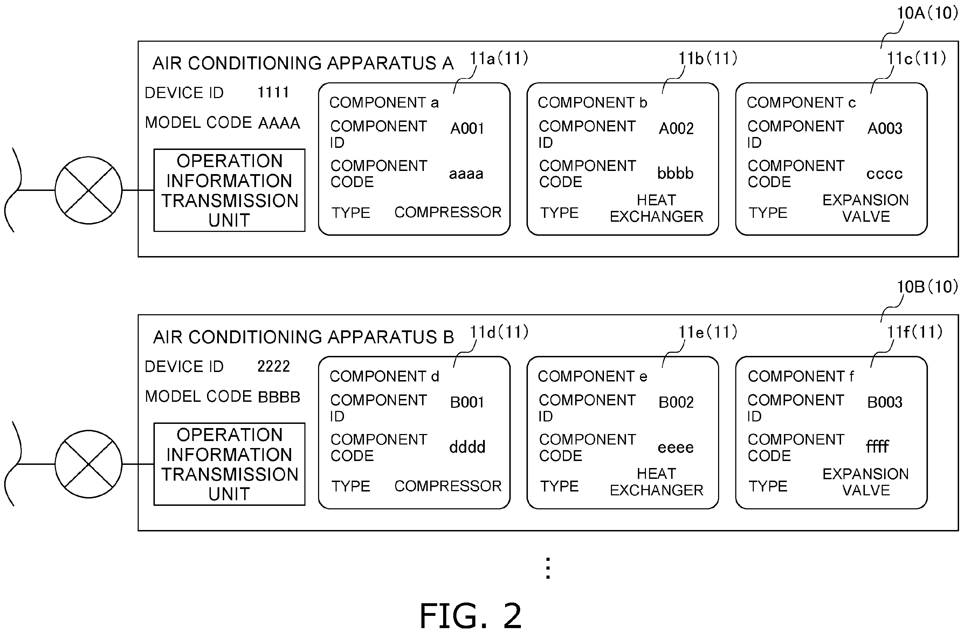

Fig. 2 is a schematic diagram of an air conditioning apparatus 10A and an air conditioning apparatus 10B. A description of, for example, the air conditioning apparatus 10A is given below unless otherwise needed. The air conditioning apparatus 10A performs a vapor compression refrigeration cycle in a refrigerant circuit to thereby perform air conditioning operations including cooling and heating for a target space. The air conditioning apparatus 10A is connected to a network, such as the Internet, so that communication with the management apparatus 20 is possible.

The air conditioning apparatus 10A includes, as main units, the plurality of components 11 that constitute the refrigerant circuit and an operation information transmission unit 12 that obtains and transmits to the management apparatus 20, pieces of operation information of the components 11. A piece of operation information includes values detected by various sensors, such as a temperature sensor and a pressure sensor, mounted in each component 11 and indicates the operation state of the component 11. A piece of operation information may further include setting information regarding, for example, an air conditioning operation performed by the air conditioning apparatus 10A. Mounted sensors differ depending on the component 11, and therefore, items in a piece of operation information transmitted from the operation information transmission unit 12 differ depending on the component 11. The components 11 include, for example, a compressor, a heat exchanger, and an expansion valve as illustrated in Fig. 2, and as the components 11a, a component 11a, a component 11b, a component 11c, a component 1d, a component 11e, and a component 11f are present. A description of, for example, the component 11a is given below unless otherwise needed.

For the air conditioning apparatus 10A, a device ID and a model code are set in advance. The device ID is information for identifying the air conditioning apparatus 10A and is information specific to the air conditioning apparatus 10A. Here, the device ID of the air conditioning apparatus 10A is 1111. The model code is information for identifying the model of the air conditioning apparatus 10A and is information set for each model. Specifically, for example, the air conditioning apparatus 10A and another air conditioning apparatus have the same model codes if the air conditioning apparatuses are of the same model, and the air conditioning apparatus 10A and another air conditioning apparatus have different model codes if the air conditioning apparatuses are of different models. Here, the model code of the air conditioning apparatus 10A is AAAA. At the time of initial registration described below, air conditioning apparatuses having the same model codes are constituted by the same components 11. In the initial registration, when the model code is input, the plurality of components 11 included in the air conditioning apparatus can be registered in the database DB.

For the component 11a, a component ID and a component code are set in advance. The component ID is information for identifying each component 11 and is information specific to the component 11. The component ID may be issued for each component when the component 11 is registered in the database DB or may be set in advance. Here, the component ID of the component 11a is A001. The component code is information for identifying, for example, the model number or model of the component 11. Here, the component code of the component 11a is aaaa. Further, the components 11 are distinguished from each other on the basis of their types. For example, the component 11a is a compressor. Each component 11 can be replaced by a component 11 of the same type.

### (3) Management Apparatus 20

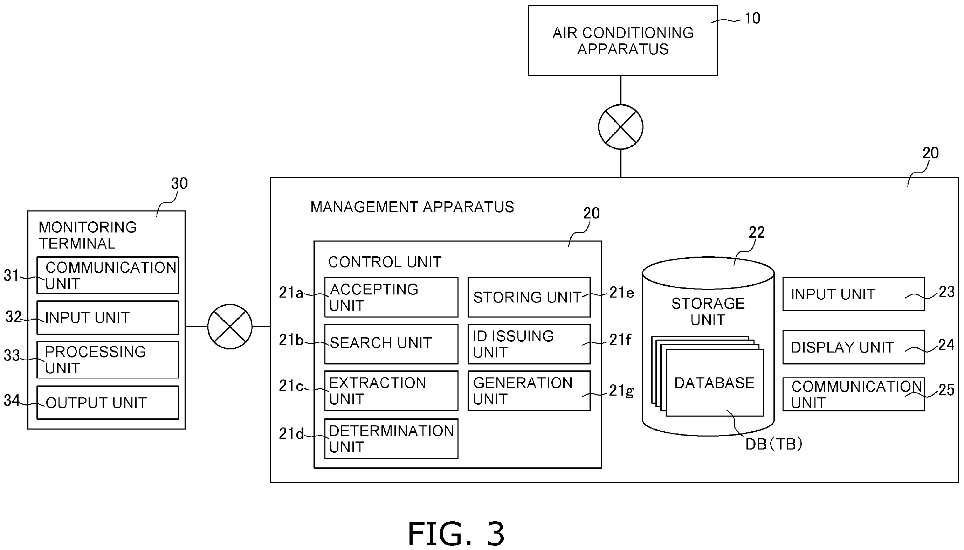

Fig. 3 is a schematic diagram of the management apparatus 20. The management apparatus 20 is connected to the plurality of air conditioning apparatuses 10 and to the monitoring terminal 30 via networks.

The management apparatus 20 includes a control unit 21, a storage unit 22, an input unit 23, a display unit 24, and a communication unit 25 as hardware units. The control unit 21 is connected to the other hardware units via a signal line and controls the other hardware units.

The control unit 21 is, for example, a CPU and is a device that executes a component management program. The component management program is stored in advance in the storage unit 22 and executed by the control unit 21. The control unit 21 causes a computer to perform processes including the initial registration process, the component registration process, an operation information obtaining process, and the performance information generation process.

The control unit 21 includes an accepting unit 21a, a search unit 21b, an extraction unit 21c, a determination unit 21d, a storing unit 21e, an ID issuing unit 21f, and a generation unit 21g as functional units. The accepting unit 21a accepts various types of information input via the input unit 23 and various types of information received by the communication unit 25. The search unit 21b searches for various types of information among pieces of information stored in the database DB on the basis of an input search condition. The extraction unit 21c extracts various types of information from among pieces of information stored in the database DB as necessary. The determination unit 21d determines a table TB to be used in various processes. The storing unit 21e stores various types of information in the tables TB. The ID issuing unit 21f issues an ID for the component 11 that is registered. The generation unit 21g generates performance information of each air conditioning apparatus 10 from pieces of operation information of the plurality of components 11.

The control unit 21 performs a process corresponding to a request from the monitoring terminal 30 and generates, for example, monitoring information that indicates the result of processing.

The storage unit 22 is an example of a recording medium. The storage unit 22 is, for example, a flash memory, a RAM, or an HDD. In the storage unit 22, various types of information regarding the air conditioning apparatuses 10 and the components 11 are stored in advance. The various types of information regarding the air conditioning apparatuses 10 and the components 11 may be generated by another system or may be stored in a portable storage medium, such as a USB memory or an optical storage medium, and distributed.

In the storage unit 22, the database DB is created. Information regarding the plurality of components 11 included in the air conditioning apparatus 10A is registered in the database DB, and a table TB is created for each type of component 11. In each table TB, for example, the type of the component 11, the component ID, the device ID and the model code of the air conditioning apparatus 10 in which the component 11 is included, the use start date of the component 11, the use end date of the component 11, and operation information of the component 11 are stored. Items in the operation information stored in each table TB differ depending on the component 11.

The input unit 23 is operated by the administrator to input various types of information to the component management program. The input unit 23 is, for example, a mouse, a keyboard, or a touch panel.

The display unit 24 displays various types of information output from the component management program on a display screen.

The communication unit 25 includes a receiver that receives data to be input to the component management program and a transmitter that transmits data output from the component management program. The communication unit 25 is, for example, a communication chip or an NIC. The communication unit 25 receives operation information from the air conditioning apparatuses 10 via the network. Further, the communication unit 25 receives various requests regarding the air conditioning apparatuses 10 from the monitoring terminal 30 and transmits monitoring information to the monitoring terminal 30.

The management apparatus 20 may be constituted by a single computer or may be constituted by a plurality of computers. In a case where the management apparatus 20 is constituted by a plurality of computers, its functions may be distributed among the computers and implemented. The database DB may be created on any one of the computers or may be created on two or more computers in a distributed manner.

### (4) Various Processes

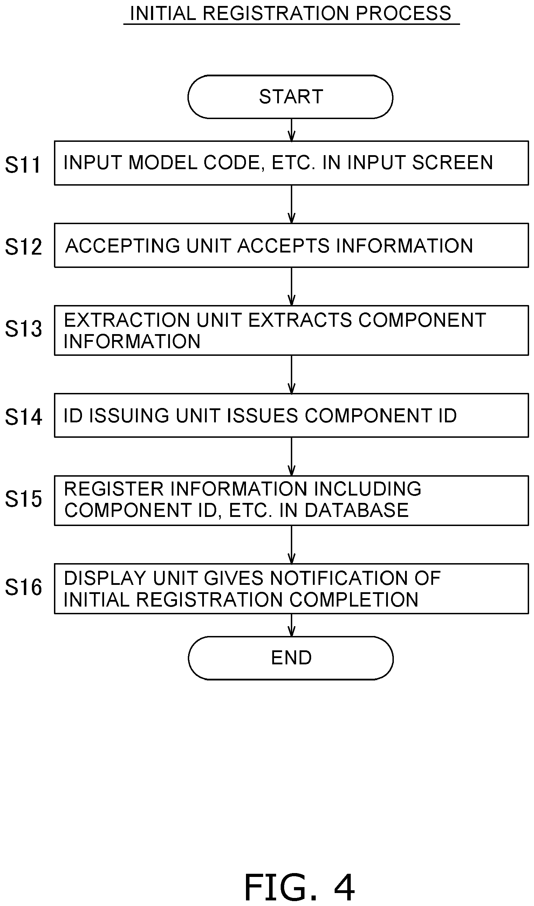

Various processes performed by the management apparatus 20 are described below with reference to Fig. 4 to Fig. 11. Note that flows illustrated in the figures can be changed as appropriate, and as long as the processes are properly performed, the order of any steps may be changed, any steps may be simultaneously performed, or other steps not illustrated may be added.

### (4-1) Initial Registration Process

Now, the flow illustrated in Fig. 4 for registering the plurality of components 11 included in the air conditioning apparatus 10 in the database DB is described. The initial registration process is performed according to the flow as illustrated by step S11 to step S16.

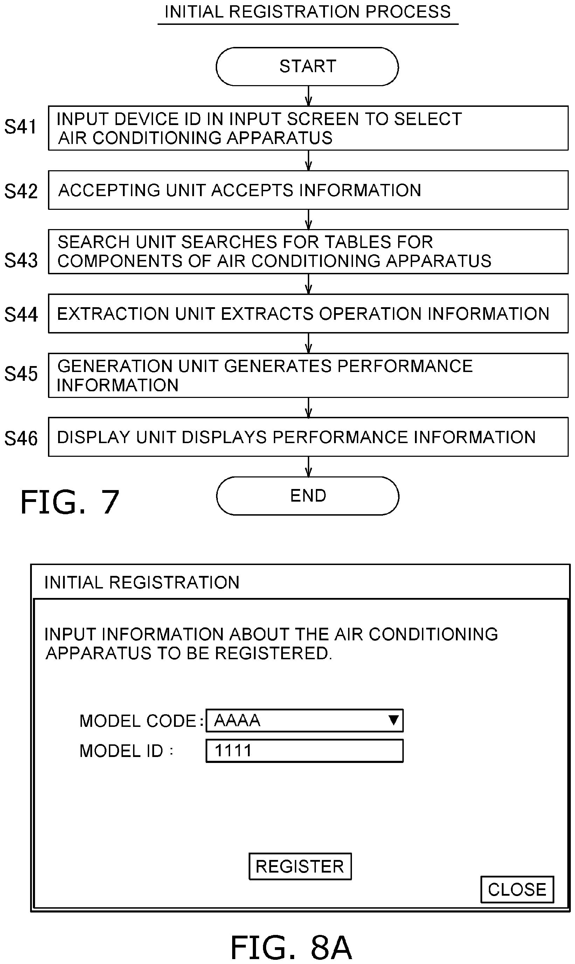

In step S11, for example, the administrator who performs initial registration inputs, in accordance with an input screen displayed on the display unit 24, the device ID or the model code of the air conditioning apparatus 10 to be registered. The input is performed via the input unit 23. Although the administrator inputs the device ID or the model code to thereby perform initial registration, input information is not limited to these as a matter of course. For example, the administrator may input information about each of the plurality of components 11 included in the air conditioning apparatus 10. Here, initial registration of the air conditioning apparatus 10 is performed. That is, the administrator inputs AAAA, which is the model code of the air conditioning apparatus 10, and 1111, which is the device ID thereof. The input screen is, for example, a screen as illustrated in Fig. 8A.

In step S12, the accepting unit 21a of the management apparatus 20 accepts the information input via the input unit 23.

In step S13, the extraction unit 21c extracts, from among pieces of information stored in the storage unit 22, pieces of information about the plurality of components 11 included in the air conditioning apparatus 10 to be registered, on the basis of the input model code.

In step S14, the ID issuing unit 21f issues a component ID to each of the plurality of components 11 included in the air conditioning apparatus 10 to be registered.

In step S15, the component IDs and various types of information regarding the components 11 are registered in the database DB. Accordingly, it becomes possible to store operation information of each component 11 in a corresponding table TB.

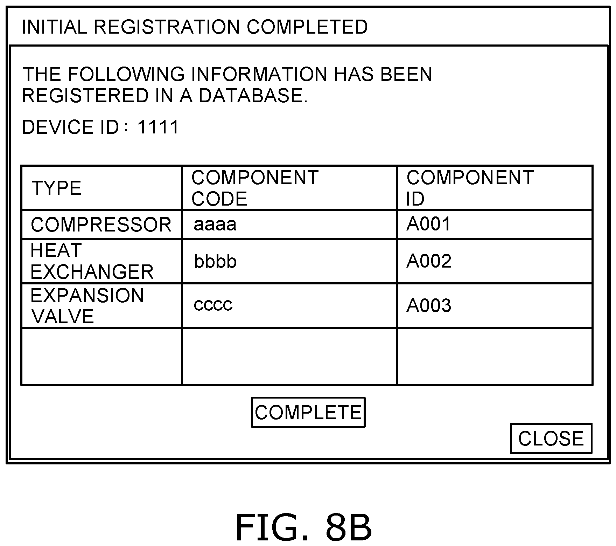

In step S16, the display unit 24 displays an initial registration completion screen for notifying the administrator of completion of initial registration, and the process ends. The initial registration completion screen is, for example, the screen illustrated in Fig. 8B.

### (4-2) Operation Information Storing Process

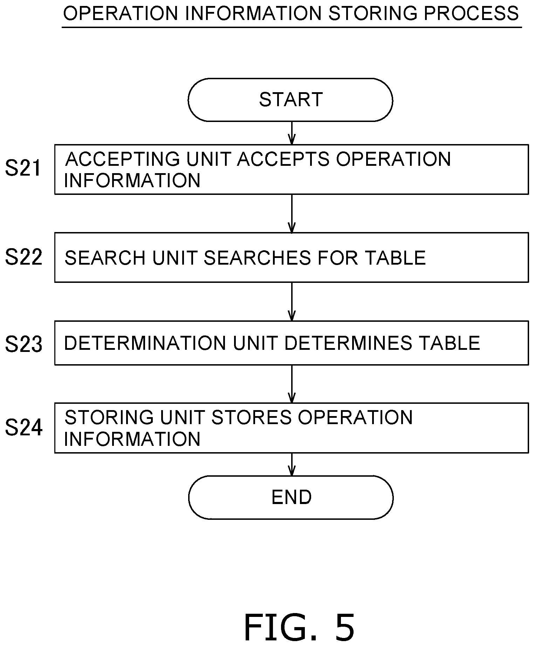

Now, the flow illustrated in Fig. 5 for storing operation information of the component 11a received from the air conditioning apparatus 10A in the database DB is described. A state is assumed where at least information about the air conditioning apparatus 10 is registered in the database DB and the tables TB are created. The operation information registration process is performed according to the flow as illustrated by step S21 to step S24.

In step S21, the accepting unit 21a accepts operation information from the air conditioning apparatus 10 via the communication unit 25. Here, the accepting unit 21a accepts operation information of the component 11a.

In step S22, the search unit 21b searches for a table TB for storing the operation information of the component 11a while using a component ID included in the accepted operation information as a search condition. Specifically, the search unit 21b makes a search while using a component ID A001 as a search condition.

In step S23, the determination unit 21d determines the table TB for storing the operation information of the component 11a on the basis of the result of search in step S22. Here, the result of search indicates a table TB for the compressor of the air conditioning apparatus 10A as the table TB for storing the operation information of the component 11a.

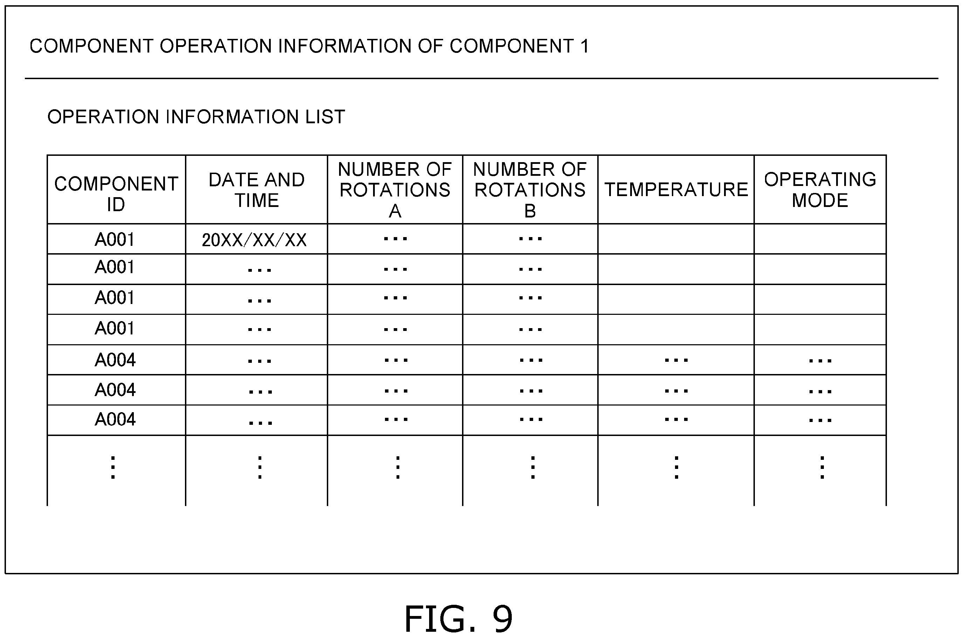

In step S24, the storing unit 21e stores the operation information of the component 11a in the determined table TB. The operation information is stored as illustrated in, for example, Fig. 9.

### (4-3) Component Registration Process

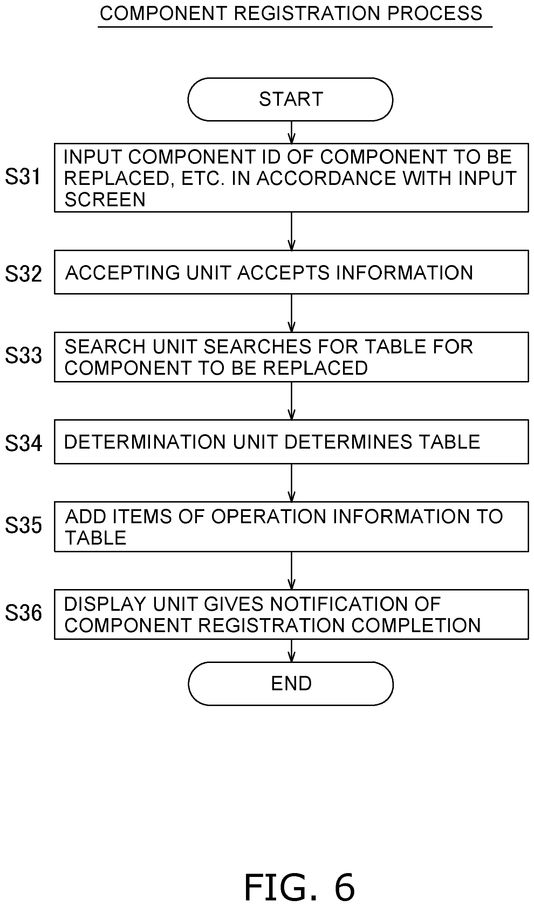

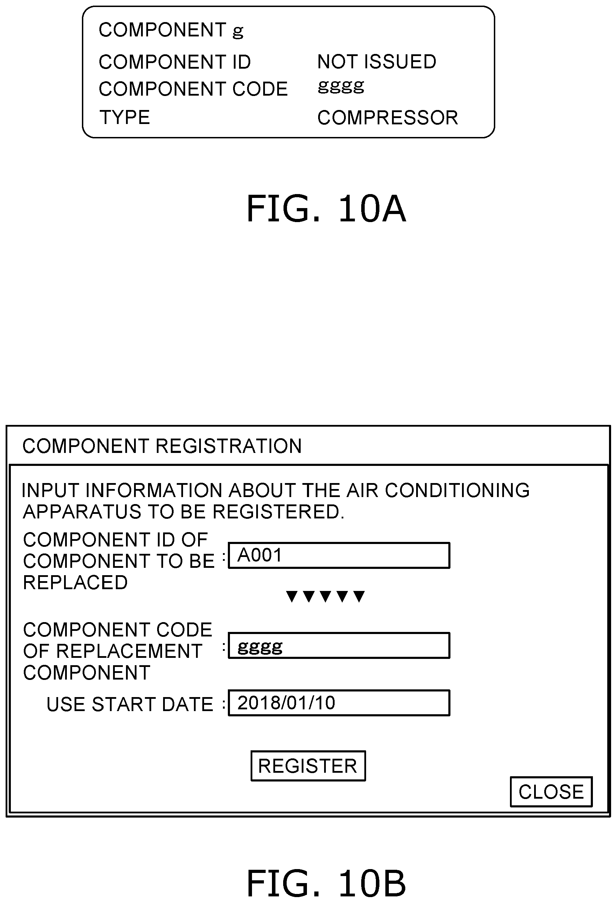

Now, the flow illustrated in Fig. 6 for replacing the component 11a among the plurality of components 11 included in the air conditioning apparatus 10A and registering a new component 11g is described. It is assumed here that the component 11 to be replaced is the component 11a, and the component 11 that is a replacement is the component 11g illustrated in Fig. 10A. A state is assumed where at least information about the air conditioning apparatus 10A is registered in the database DB and the tables TB are created. The component registration process is performed according to the flow as illustrated by step S31 to step S34.

In step S31, the administrator inputs information in accordance with an input screen. Here, the administrator inputs the component ID of the component 11a to be replaced, the component code of the component 11g that is a replacement, and the use start date. The input screen is, for example, a screen as illustrated in Fig. 10B.

In step S32, the accepting unit 21a accepts the input information.

In step S33, the search unit 21b searches for a table TB for the component 11a to be replaced while using the component ID as a search condition.

In step S34, the determination unit 21d determines a table TB for registering the component 11g that is a replacement on the basis of the result of search in step S32. Here, the component 11g that is a replacement is the component 11 of a type the same as the type of the component 11a to be replaced. Specifically, in a case where the component 11a to be replaced is a compressor, the component 11g that is a replacement is always a compressor.

In step S35, items of operation information to be stored in the table TB are added as illustrated in, for example, Fig. 9 on the basis of the component code input in step S31.

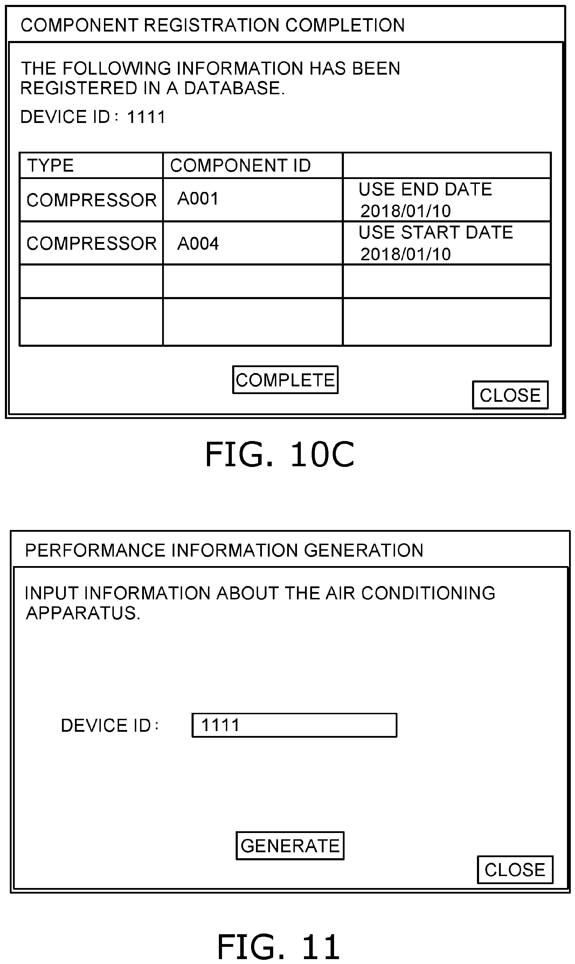

In step S36, the display unit 24 displays a component registration completion screen for notifying the administrator of completion of component registration. The component registration completion screen is the screen illustrated in, for example, Fig. 10C.

### (4-4) Performance Information Generation Process

Now, the flow illustrated in Fig. 7 for generating performance information, which is operation information of the entire air conditioning apparatus 10A, from operation information of each component 11 registered in the database DB is described. A state is assumed where information about the air conditioning apparatus 10A is registered in the database DB, the tables TB are created, and pieces of operation information of the respective components 11 included in the air conditioning apparatus 10A are accumulated. The performance information generation process is performed according to the flow as illustrated by step S41 to step S44.

In step S41, the administrator inputs in accordance with an input screen, the device ID of the air conditioning apparatus 10A for which operation information is to be generated. Accordingly, the air conditioning apparatus for which performance information is to be generated is selected. The input screen is, for example, a screen as illustrated in Fig. 11.

In step S42, the accepting unit 21a accepts the input information.

In step S43, the search unit 21b searches for tables TB for the plurality of components 11 included in the air conditioning apparatus 10 while using the device ID as a search condition.

In step S44, the extraction unit 21c extracts pieces of operation information of the components 11 from the plurality of tables TB on the basis of the result of search in step S42.

In step S45, the generation unit 21g generates performance information of the air conditioning apparatus 10 from the pieces of operation information of the components 11 extracted in step S43.

In step S46, the display unit 24 displays the performance information.

### (5) Monitoring Terminal

Fig. 3 is a schematic diagram of the monitoring terminal 30. The monitoring terminal 30 transmits to the management apparatus 2 various requests to the air conditioning apparatuses 10. The monitoring terminal 3 monitors the states of the air conditioning apparatuses 10 on the basis of monitoring information transmitted from the management apparatus 20. The monitoring terminal 30 is operated by, for example, a monitoring person who is authorized to perform various types of control for the air conditioning apparatuses 10.

The monitoring terminal 30 includes a communication unit 31, an input unit 32, a processing unit 33, and an output unit 34. The communication unit 31 is connected to the management apparatus 20 via a network and transmits to the management apparatus 20 requests to the air conditioning apparatuses 10. The input unit 32 accepts a request to be transmitted to the management apparatus 20. The processing unit 33 performs various types of information processing in the monitoring terminal 30. The output unit 34 outputs, for example, monitoring information received from the management apparatus 20.

With the above-described configuration, the monitoring terminal 30 can transmit requests for performing various operations including a heating operation and a cooling operation to the air conditioning apparatuses 10. Further, the monitoring terminal 30 can output monitoring information that indicates the results of processes in response to the requests. Further, the monitoring terminal 30 can send replies to various inquiries from the management apparatus 20 via the output unit 34.

### (6) Features

### (6-1)

The air conditioning unit management method according to the present disclosure manages the air conditioning apparatuses 10, which are air conditioning units, each including the plurality of components 11. The air conditioning unit management method includes a first step S14 to a seventh step S45. In the first step S14, a component ID is assigned to a component 11 as a specific ID. In the second step S24, operation information of the component 11 is stored in association with the component ID assigned to the component 11. In the third step S21, pieces of operation information of the plurality of components 11 are obtained via a network. In the fourth step S24, on the basis of component IDs, the pieces of operation information are stored in association with pieces of component information of the components respectively. In the fifth step S41, one air conditioning apparatus 10 is selected from among the plurality of air conditioning apparatuses 10. In the sixth step S44, among the plurality of pieces of operation information, pieces of operation information of the plurality of components 11 of the selected air conditioning apparatus 10 are obtained. In the seventh step S45, performance information, which is information about the air conditioning apparatus 10, is generated from the obtained pieces of operation information.

The database DB illustrated in the present disclosure is appropriate to a case where a retrofit is performed or a component fails due to an unexpected event and where only a component among the components 11 is replaced. Specifically, in a database of the prior art, in a case where a component of an air conditioning apparatus is replaced, operation information after replacement is stored in a table different from a table in which operation information is stored before replacement. With such a database, it is necessary to refer to a plurality of tables for collecting necessary information, which requires extra operations. With the database illustrated in the present disclosure, the components 11 are managed on a per component basis, and operation information of each component 11 can be stored in an appropriate table TB. Accordingly, the database DB from which necessary information can be easily obtained and which is appropriate to replacement of a component can be created.

### (6-2)

The management apparatus 20 according to the present disclosure manages the air conditioning apparatus 10 including the plurality of components 11. The management apparatus 20 includes the storage unit 22, the determination unit 21d, the communication unit 25, the extraction unit 21c, and the generation unit 21g. The storage unit 22 has the plurality of tables TB for storing pieces of operation information of the respective components 11 obtained from the air conditioning apparatus 10. The determination unit 21d determines a table TB for storing a piece of operation information among the plurality of tables TB. A specific ID is assigned to each of the plurality of components 11. The determination unit 21d determines the table TB on the basis of the specific ID. The storage unit 22 stores the piece of operation information in the determined table TB. The communication unit 25 obtains pieces of operation information from the air conditioning apparatuses 10 via a network. The extraction unit 21c extracts pieces of operation information of the plurality of components 11 included in the selected air conditioning apparatus 10 from among the pieces of operation information stored in the storage unit 22. The generation unit 21g generates information about the air conditioning apparatus 10 from the pieces of operation information selected by the extraction unit 21c.

The management apparatus 20 according to the present disclosure implements the air conditioning unit management method according to the present disclosure.

### (6-3)

In the present disclosure, the table TB for storing operation information is provided for each type of component 11. Initial registration of the plurality of components 11 in the tables TB is performed on the basis of the model code of the air conditioning apparatus 10. Note that the tables TB are generated by an external system. In a case where a component 11 is replaced by a new component 11 and where an item of a piece of operation information of the new component 11 is added, the item is also added to the table TB. Accordingly, the table TB can appropriately store operation information of the component 11 that is a replacement.

### (6-4)

The management system 100 according to the present disclosure includes the air conditioning apparatus 10, the management apparatus 20, and the monitoring terminal 30 that monitors the air conditioning apparatus 10. The management apparatus 20 presents pieces of operation information of the components 11 in response to a request from the monitoring terminal 30. Further, the management apparatus 20 provides information to the monitoring terminal 30 in a case of detecting a malfunction in the air conditioning apparatus 10.

### (7) Modification

In the present disclosure, a process (initial registration process) for registering the plurality of components 11 included in the air conditioning apparatus 10 in the database DB is performed by manual input by, for example, the administrator. However, the initial registration process may be performed with the following method.

First, the plurality of components 11 each have a component ID assigned in advance. Note that the component ID may be assigned in advance at, for example, the production plant of the component 11. Each of the plurality of components 11 transmits its component ID to the management apparatus 20 via a network at the time of initial communication between the air conditioning apparatus 10 in which the component 11 is included and the management apparatus 20. The management apparatus 20 registers the received component ID in the database DB. In a case of accepting operation information of each of the components 11, the management apparatus 20 registers the operation information in the database DB in association with the component ID. Note that each of the plurality of components 11 may transmit its component ID to the management apparatus 20 at a specific timing other than at the time of initial communication. The specific timing is, for example, the time when the air conditioning apparatus 10 is re-operated on the basis of, for example, the component registration process.

### (8)

Although the embodiment of the present disclosure has been described above, it should be understood that various changes can be made to the forms and specifics without departing from the spirit and scope of the present disclosure described in the claims.

### [Reference Signs List]

- 10: air conditioning unit
- 11: component
- 20: management apparatus
- 21c: extraction unit
- 21d: determination unit
- 21g: generation unit
- 22: storage unit
- 25: communication unit
- 30: monitoring terminal
- 100: management system
- TB: table
- S14: first step
- S21: third step
- S24: second step
- S24: fourth step
- S41: fifth step
- S44: sixth step
- S45: seventh step

### [Citation List]

### [Patent Literature]

PTL 1: Japanese Unexamined Patent Application Publication No. 2010-048422

## Claims

1. An air conditioning unit management method for managing an air conditioning unit (10) including a plurality of components (11), the air conditioning unit management method comprising:
a first step (S14) of assigning a specific ID to at least a first component; and
a second step (S24) of storing operation information of the first component in association with the specific ID assigned to the first component.

2. The air conditioning unit management method according to Claim 1, wherein
the specific IDs are assigned to the plurality of components (11) respectively in the first step (S14), and the air conditioning unit management method further comprises:
a third step (S21) of obtaining the pieces of operation information of the plurality of components (11) from the air conditioning unit (10) via a network; and
a fourth step (S24) of storing, on the basis of the specific IDs, the pieces of operation information in association with pieces of component information of the components (11) respectively.

3. The air conditioning unit management method according to Claim 1 or 2, the air conditioning unit management method being a method for managing a plurality of air conditioning units (10), the air conditioning unit management method further comprising:
a fifth step (S41) of selecting one air conditioning unit (10) from among the plurality of air conditioning units (10);
a sixth step (S44) of obtaining, among the plurality of pieces of operation information, the pieces of operation information of the plurality of components (11) of the selected air conditioning unit (10); and
a seventh step (S45) of generating information about the air conditioning unit (10) from the obtained pieces of operation information.

4. A management apparatus (20) for managing an air conditioning unit (10) including a plurality of components (11), the management apparatus (20) comprising:
a storage unit (22) that has a plurality of tables (TB) for storing pieces of operation information of the respective components (11) obtained from the air conditioning unit (10); and
a determination unit (21d) that determines the table (TB) for storing the piece of operation information among the plurality of tables (TB), wherein
a specific ID is assigned to at least a first component among the plurality of components (11),
the determination unit (21d) determines the table (TB) on the basis of the specific ID, and
the storage unit (22) stores the piece of operation information in the determined table (TB).

5. The management apparatus (20) according to Claim 4, further comprising
a communication unit (25) that obtains the pieces of operation information from the air conditioning unit (10) via a network.

6. The management apparatus (20) according to Claim 4 or 5, further comprising:
an extraction unit (21c) that extracts, from among the pieces of operation information stored in the storage unit (22), the pieces of operation information of the plurality of components (11) included in the air conditioning unit (10) that is selected; and
a generation unit (21g) that generates information about the air conditioning unit (10) from the pieces of operation information extracted by the extraction unit (21c).

7. The management apparatus (20) according to any of Claims 4 to 6, wherein
the tables (TB) are provided for respective types of the components (11).

8. The management apparatus (20) according to any of Claims 4 to 7, wherein
in a case where the component (11) is replaced by a new component (11) and where an item of the piece of operation information of the new component (11) is added, the item is also added to the tables (TB).

9. The management apparatus (20) according to any of Claims 4 to 8, wherein initial registration of the tables (TB) of the plurality of components (11) is performed on the basis of a model code of the air conditioning unit (10).

10. The management apparatus (20) according to any of Claims 4 to 9, wherein
the tables (TB) are generated by an external system.

11. A management system (100) comprising:
an air conditioning unit (10);
the management apparatus (20) according to any of Claims 4 to 10; and
a monitoring terminal (30) that monitors the air conditioning unit (10), wherein
the management system presents the pieces of operation information of the components (11) in response to a request from the monitoring terminal (30).

12. The management system (100) according to Claim 11, wherein
the management apparatus (20) provides information to the monitoring terminal (30) in a case of detecting a malfunction in the air conditioning unit (10).
